# EUROPÄISCHE PATENTSCHRIFT

(11) **EP 0 319 009 B1**
(45) Veröffentlichungstag und Bekanntmachung des Hinweises auf die Patenterteilung: **06.11.1996**
(21) Anmeldenummer: 88120097.6
(22) Anmeldetag: 01.12.1988
(51) Int. Cl.: F24H 1/18

(54) **Warmwasserspeicher**
Boiler
Ballon d'eau chaude

(30) Priorität: 04.12.1987 DE 3741211; 28.01.1988 DE 3802562
(43) Veröffentlichungstag der Anmeldung: 07.06.1989
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- GB-A- 358 366
- GB-A- 705 617
- US-A- 2 356 657
- US-A- 4 549 525

## Beschreibung

Die Erfindung betrifft einen Warmwasserspeicher mit den Merkmalen des Oberbegriffs des Patentanspruches 1.

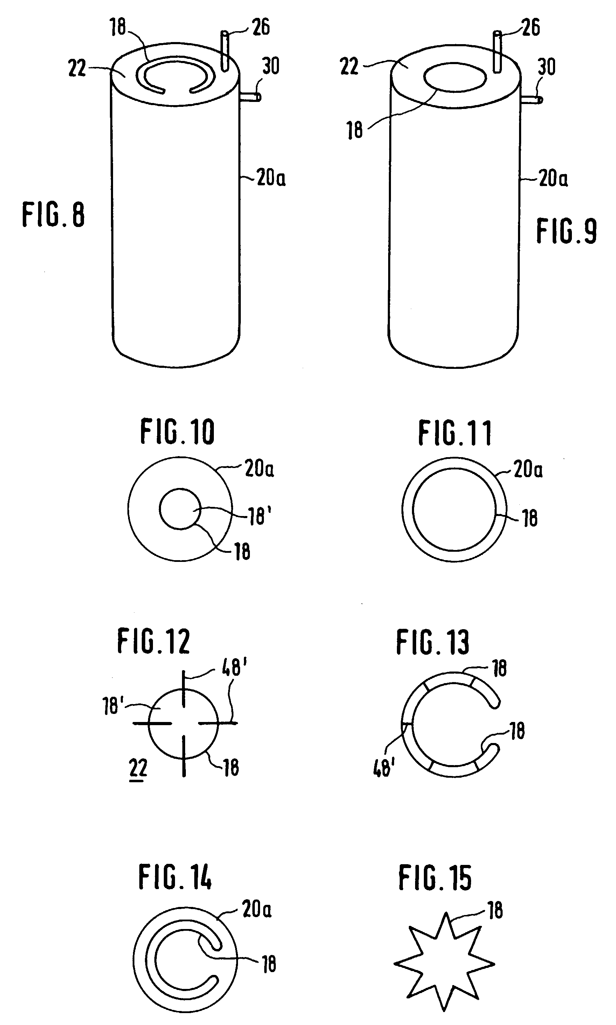

Aus der US-A-4 549 525 ist ein Warmwasserspeicher dieser Art bekannt, bei dem ein inneres Abgasrohr von einem Mantel umgeben ist, in den kaltes Wasser von oben nach unten einströmt, um im unteren Bereich des Speichers in dessen Innenraum einzutreten (Fig.9).

Aus der DE-B 33 10 023 ist eine Vorratswasserheizanlage bekannt, bei der das zu erwärmende Wasser (also das Kaltwasser) vertikal aufwärts strömt, während der heiße Abgasstrom im Gegenstrom von oben nach unten strömt.

Aus der GB-B-358 366 ist ein Warmwasserspeicher bekannt, bei dem ein zentrales Abgasrohr von einem Mantel umgeben ist. Das Wasser strömt in dem Mantel von unten nach oben.

Das Wassser in gattungsgemäßen Warmwasserspeichern wird durch Heißgas erwärmt, welches durch ein Abgasrohr strömt. Als Wärmequelle zu Erzeugung des Heißgases kommen insbesondere Gas-brenner, Kohle oder andere Brennstoffe in Frage. Hauptsächlich werden zur Zeit gasbeheizte Warmwasserspeicher eingesetzt, bei denen ein Gasbrenner die Heißgase erzeugt.

Herkömmliche Warmwasserspeicher der vorstehend beschriebenen Art weisen einen relativ schlechten Wirkungsgrad bei der Umsetzung der durch den Energiewandler (z.B. Gasbrenner, Kohle etc.) erzeugten Wärme in Erhitzung des Wasser auf. Während bei Elektro-Warmwasserspeichern der Wirkungsgrad bei ca. 90 % liegt, weisen übliche Gas-Warmwasserspeicher nur einen Wirkungsgrad von 40 bis 70 % auf. Nachfolgend soll der schlechte Wirkungsgrad beispielhaft anhand eines mit einem Gasbrenner betriebenen Warmwasserspeichers erläutert werden. Die Betrachtungen lasssen sich ohne weiteres auf anders betriebene Warmwasserspeicher übertragen.

Der schlechte Wirkungsgrad bei Gas-Warmwasserspeichern ist darauf zurückzuführen, daß das Wasser mit offener Flamme erhitzt wird, wodurch heiße Abgase entstehen, die in einen Schornstein oder ins Freie geleitet werden müssen. Diese abgeführten Heißgase nehmen einen erheblichen Teil der vom Gas-Brenner erzeugten Wärme nutzlos mit ins Freie.

Bei den hier in Rede stehenden Warmwasserspeichern verläuft ein Abgasrohr vom im unteren Bereich des Speichers angeordneten Brenner bis zum Schornsteinanschluß. Das Abgasrohr durchsetzt den Innenraum des Warmwasserspeichers. Die Heißgase erwärmen das Abgasrohr, welches seinerseits das umgebende Wasser im Warmwasserspeicher erwärmt. Zur Erhöhung des Wärmeübergangs vom Heißgas in das Wasser ist es bereits bekannt, sogenannte Turbulenzkörper im Abgasrohr anzuordnen, welche die bis etwa 350°C heißen Abqase verwirbeln und damit ihren Durchgang durch das Abgasrohr verzögern. Für den Wärmeübergang aus dem Heißgas in das Wasser ist überdies eine gute Wärmeleitfähigkeit des Materials des Abgasrohres wünschenswert.

Herkömmliche Warmwasserspeicher der vorstehend beschriebenen Art weisen neben der geringen Ausnutzung der Energie der Heißgase noch einen weiteren erheblichen Nachteil auf. In den Zeitspannen, in welchen der Gas-Brenner (oder eine andere Wärmequelle) nicht betrieben wird, weil die Temperatur des Wassers im Warmwasserspeicher bereits einen vorgegebenen Wert erreicht hat, wirkt das Abgasrohr wärmeabführend. Das heiße Wasser im Warmwasserspeicher erhitzt nämlich das Abgasrohr, welches Wärme direkt ableitet sowie an in seinem Innenraum befindliche Gase abgibt, die zum Schornstein abströmen. Für die Zeitspannen, in denen der Gasbrenner nicht betrieben wird, wäre also für das Material des Abgasrohres eine möglichst geringe Wärmeleitfähigkeit wünschenswert. Diese Forderung steht aber im Gegensatz zu den Anforderungen beim Betrieb des Gas-Brenners, da dann in umgekehrter Richtung möglichst viel Wärme aus dem Heißgas über das Abgasrohr in das umgebende Wasser abgeführt werden soll.

Der Erfindung liegt die Aufgabe zugrunde, einen Warmwasserspeicher der eingangs genannten Art derart weiterzubilden, daß in den Zeitspannen, in denen kein Heißgas durch das Abgasrohr geführt wird, ein Wärmeverlust aus dem erhitzten Wasser des Warmwasserspeichers über das Abgasrohr vermieden ist.

Erfindungsgemäß wird diese Aufgabe mit den Merkmalen des Patentanspruches 1 gelöst.

Die erfindungsgemäß vorgesehene Führunq schafft zwischen sich und dem Abgasrohr einen Zwischenraum, in dem kaltes Wasser geführt wird. Der erfindungsgemäß vorgesehene Zwischenraum zwischen dem Abgasrohr und der Führung, welche in einem einfachen Ausführungsbeispiel als das Abgasrohr umgebender Mantel ausgestaltet ist, wirkt als "Wärmepuffer" zwischen dem Innenraum des Warmwasserspeichers und dem Abgasrohr, welcher es ermöglicht, daß der äußere Mantel aus schlecht wärmeleitendem Material besteht, während das Abgasrohr selbst aus einem gut wärmeleitenden Material besteht. Mit dieser erfindungsgemäßen Anordnung wird einerseits der Wärmeübergang aus dem Innenraum des Warmwasserspeichers zum Abqasrohr aufgrund des schlecht wärmeleitenden Mantels behindert, während andererseits der Wärmeübergang aus den im Inneren des Abgasrohres geführten Heißgasen in das im Zwischenraum zwischen dem Abgasrohr und der Führung angeordnete Wasser gut ist.

In einer Ausgestaltung des Warmwasserspeichers ist vorgesehen, daß das Abgasrohr und der Mantel etwa konzentrisch im Warmwasserspeicher angeordnet sind.

Es versteht sich, daß sich in diesem Zusammenhang die Begriffe "oben" und "unten" auf die durch die Schwerkraft vorgegebene Vertikale beziehen.

Es ist möglich, die Wasser-Strömung durch den Zwischenraum und die Zirkulation vom Zwischenraum in den Innenraum des Warmwasserspeichers koordiniert mit dem Betrieb des Gas-Brenners entsprechend der Wasserentnahme aus dem Warmwasserspeicher elektronisch zu steuern, ggf. unter Zuhilfenahme von Temperaturfühlern, Ventilen etc.

Für diese Zwecke sind bevorzugt einfache mechanische Ventilanordnungen vorgesehen, die im wesentlichen automatisch und schwerkraftgespeist arbeiten.

Der Erfindungsgedanke ermöglicht auch eine wenig aufwendige Nachrüstung von herkömmlichen Warmwasserspeichern. Die erfindungsgemäß vorgesehene Anordnung aus Gas-Brenner (oder anderer Wärmequellen), Abgasrohr und Mantel läßt sich nämlich auch außerhalb eines Warmwasserspeichers installieren.

Der Wärmeübergang vom heißen Abgas in das Brauchwasser kann weiter dadurch gefördert werden, daß im Abgasrohr Wärmeleitbleche derart angeordnet sind, daß die Abgas-Strömung "Umwege" nehmen muß, so daß die Verweilzeit der heißen Abgase im Abgasrohr und damit die Wärmeausnutzung vergrößert werden. Beispiels weise können die Wärmeleitbleche derart angeordnet werden, daß die Abqasströmunq einen wendelförmigen Verlauf nimmt. Die erfindungsgemäß vorgesehenen Wärmeleitbleche haben überdies noch den Vorteil, daß sie das Abgasrohr mechanisch stabilisieren, so daß das Abgasrohr selbst relativ dünnwandig ausgebildet sein kann, was wiederum den Wärmeübergang fördert. Die beim Stand der Technik vorgesehenen "Turbulenzkörper" weisen diesen Vorteil nicht auf.

Eine besonders einfache Steuerung der Wasserströmung zwischen dem Zwischenraum und dem Innenraum des Warmwasserspeichers ist bei einer besonderen Ausgestaltung dadurch erreicht, daß in einer leitenden Verbindung zwischen den genannten Räumen im vertikal unteren Abschnitt ein Ventil vorgesehen ist, das in Richtung in den Zwischenraum ohne wesentlichen Widerstand öffnet, während es in umgekehrter Richtung aus dem Zwischenraum in den Innenraum des Warmwasserspeichers nur bei Überschreiten einer vorgegebenen Druckdifferenz öffnet.

In einer weiteren bevorzugten Ausgestaltung der Erfindung ist vorgesehen, daß zur Vermeidung von Kalkansammlungen auf der Wand des Brennerraumes, welche den Wärmeübergang vom Brennraum in das Wasser im Speicher behindern würden, die Wand des Brennraumes zumindest teilweise schräggestellt ist und mit der Vertikalen einen spitzen Winkel bildet.

Um Kalkablagerungen oder dergleichen auf der Wand des Brennraumes zu verhindern, ist in einer weiteren bevorzugten Ausgestaltung des erfindungsgemäßen Warmwasserspeichers vorgesehen, daß die Wand des Brennraumes von einem temperaturabhängigen Dehnungskörper beaufschlagt wird. Der Dehnungskörper ist nahe dem Brenner angeordnet und dehnt sich je nach dem Betriebszustand des Brenners mehr oder weniger. Dabei verändert er auch die Form der Wand des Brennraumes, so daß sich Kalkablagerungen oder dergleichen lösen und abplatzen.

Nachfolgend werden Ausführungsbeispiele der Erfindung anhand der Zeichnung näher erläutert. Es zeigt:
- Fig. 1: schematisch ein erstes Ausführungsbeispiel eines gasbeheizten Warmwasserspeichers;
- Fig. 2: einen Schnitt entlang der Linie I-II der Fig. 1;
- Fig. 3: eine Variante des Ausführungsbeispieles gemäß Fig. 1;
- Fig. 4: ein weiteres Ausführungsbeispiel eines erfindungsgemäßen gasbeheizten Warmwasserspeichers, bei dem der Gas-Brenner, das Abgasrohr und der umgebende Mantel außerhalb des Warmwasserspeichers angeordnet sind;
- Fig. 5 und 6: ein Ausführungsbeispiel von Wärmeleitblechen;
- Fig. 7, 7a, 7b u. 7c: eine bevorzugte Ventil-Anordnung;
- Fig. 8 bis 15: Ausführungsbeispiele für das Abgasrohr bzw. den umgebenden Mantel;
- Fig. 16: ein weiteres Ausführungsbeispiel eines Warmwasserspeichers, bei dem die Führung als wendelförmiges Rohr um das Abgasrohr gelegt ist;
- Fig. 17: einen Horizontalschnitt durch ein weiteres Ausführungsbeispiel eines Warmwasserspeichers, bei dem die Führung als eine Vielzahl von vertikal gerichteten Rohren das Abgasrohr umgibt;
- Fig. 18: ein weiteres Ausführungsbeispiel eines Warmwasserspeichers, bei dem Führung durch das Innere des Abgasrohres verläuft;
- Fig. 19: ein weiteres Ausführungsbeispiel eines Warmwasserspeichers, bei dem die Führung vertikal durch das Innere des Abgasrohres und aus diesem wieder heraus geführt ist;
- Fig. 20: eine Variante bezüglich des Verlaufs des Abgasrohres;
- Fig. 21: ein weiteres Ausführungsbeispiel, bei dem zusätzlich zu einem Gasbrenner eine andere Wärmequelle für das Wasser vorgesehen ist;
- Fig. 22: ein weiteres Ausführungsbeispiel eines Warmwasserspeichers, bei dem die Führung bis in den Bereich des Brennraumes greift;
- Fig. 23: noch ein Ausführungsbeispiel eines Warmwasserspeichers, bei dem die Führung zwischen einem Gasbrenner und einer anderen Wärmequelle angeordnet ist;
- Fig. 24: verschiedene Ausführungsbeispiele einer erfindungsgemäßen Ausgestaltung des Brennraumes;
- Fig. 25: ein weiteres Ausführungsbeispiel für eine Ausgestaltung des Brennraumes; und
- Fig. 26: ein weiteres Ausführunqsbeispiel eines Warmwasserspeichers.

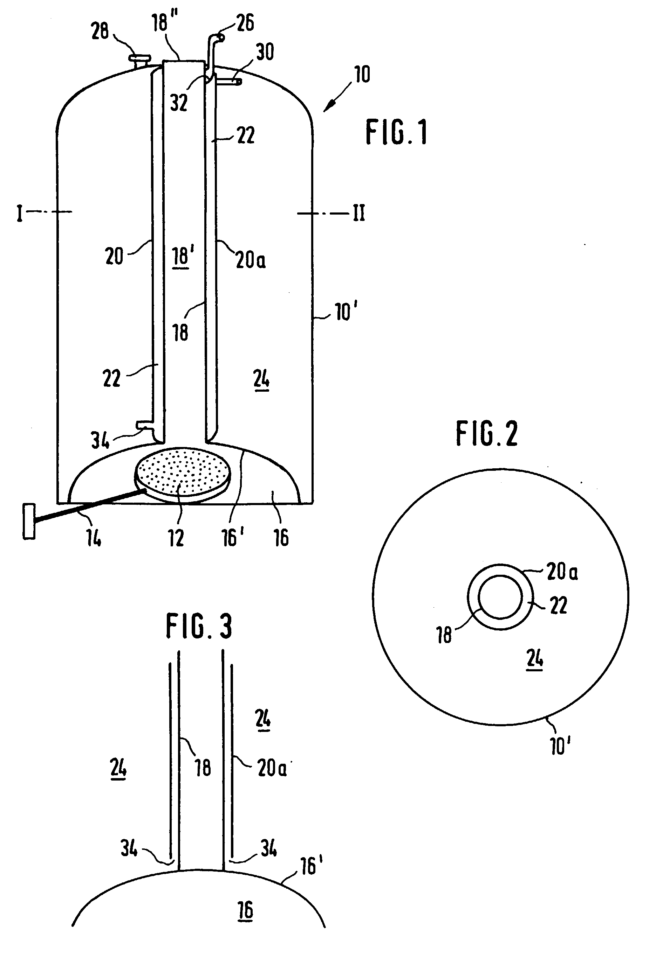

Gemäß Fig. 1 ist ein Warmwasserspeicher 10, dessen Außenwand mit 10' bezeichnet ist, mit einem Gas-Brenner 12 versehen. Der Gas-Brenner 12 wird über eine Zuleitung 14 mit Gas versorgt. Über die Wand 16' des Brennraumes 16 wird Wärme in das Innere des Warmwasserspeichers überführt.

Die bei der Gas-Verbrennung entstehenden Heißgase steigen in einem Abgasrohr 18 auf. Im unteren Bereich des Innenraumes 18' des Abgasrohres 18 weisen die heißen Abqase typischerweise eine Temperatur von mehr als 350°C auf und werden am Ausgang 18" mit möglichst geringer Temperatur in einen Schornstein oder die freie Atmosphäre gegeben.

Gemäß den Fig. 1 und 2 ist das Abgasrohr 18 außenseitig von einem Mantel 20 derart umgeben, daß zwischen dem Abqasrohr 18 und dem Mantel 20 ein Zwischenraum 22 gebildet ist. Sowohl im Zwischenraum 22 als auch im Innenraum 24 des Warmwasserspeichers befindet sich Wasser.

Über einen Kaltwassereintritt 26 tritt frisches Kaltwasser in den Zwischenraum 22 zwischen Abgasrohr 18 und Mantel 20 ein und gelangt über die Leitung 34 in den Innenraum 24 des Warmwasserspeichers. Warmwasser wird bei 28 aus dem Warmwasserspeicher 10 abgezapft.

Der Zwischenraum 22 ist mit dem Innenraum 24 des Warmwasserspeichers 10 sowohl oben als auch unten leitend verbunden.

Im oberen Bereich des Abgasrohres 18 ist gemäß Fiq. 1 ein Austritt 30 vorgesehen, über den Warmwasser aus dem Zwischenraum 22 in den Innenraum 24 treten kann. Hierfür ist gemäß Fig. 1 eine Einwegklappe 32 direkt oberhalb des Warmwasseraustritts 30 angeordnet. Strömt Kaltwasser von oben durch den Kaltwassereintritt 26 in den Zwischenraum 22, so klappt die Einwegklappe 32 in eine Vertikal-Stellung, in welcher sie den Weg durch den Warmwasseraustritt 30 sperrt aber den Weg vom Kaltwassereintritt 26 in das Innere des Zwischenraumes 22 freigibt.

Gemäß den Fig. 1 und 3 ist am unteren Ende des Abgasrohres 18 eine weitere leitenden Verbindung 34 zwischen dem Zwischenraum 22 und dem Innenraum 24 des Warmwasserspeichers 10 vorgesehen. Als leitende Verbindung kann ein Rohrstutzen (Fig. 1) oder auch eine einfache Öffnung (Fig. 3) vorgesehen sein.

Das Abgasrohr 18 ist aus gut wärmeleitendem Material, also z.B. einem Metall, gefertigt, während der äußere Mantel 20 aus einem schlecht wärmeleitendem Material besteht, beispielsweise Kunststoff.

Ist der Gas-Brenner 12 in Betrieb und strömt gleichzeitig Kaltwasser über den Eintritt 2G durch den Zwischenraum 22 nach unten (dabei ist, wie oben gesagt, der Austritt 30 durch die Klappe 32 geschlossen), so ist der Wärmeübergang aus den aufsteigenden Heißgasen über das Abgasrohr 18 in das Kaltwasser im Zwischenraum 22 aufgrund des hohen Temperaturgradienten sehr effektiv. Ist andererseits der Gas-Brenner nicht in Betrieb, so ist der Wärmeübergang aus dem Heißwasser im Innenraum 24 des Warmwasserspeichers 10 in das Abgasrohr 18 sowie dessen Innenraum 18' durch den wärmeisolierenden Mantel 20 wirksam eingeschränkt.

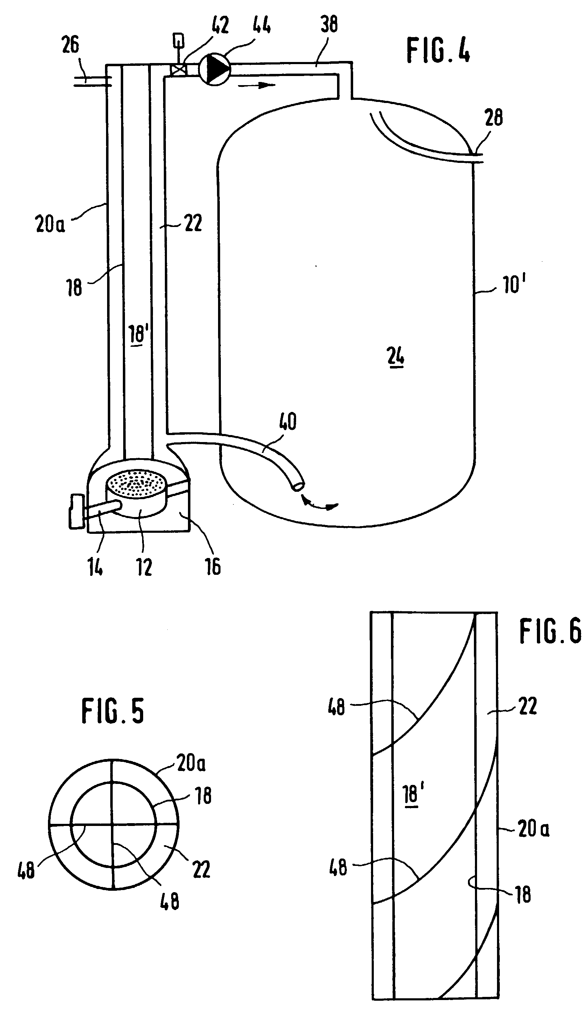

Fig. 4 zeigt ein weiteres Ausführungsbeispiel, welches insbesondere zur Nachrüstung von einfachen Warmwasserspeichern geeignet ist. Dem Ausführungsbeispiel gemäß Fig. 1 entsprechende Bauteile sind mit gleichen Bezugszeichen versehen. In Abwandlung des bisher beschriebenen Ausführungsbeispieles sind gemäß Fig. 4 der Gasbrenner 12, das Abgasrohr 18 und der äußere Mantel 20 außerhalb der äußeren Wandung 10' des Warmwasserspeichers angeordnet. Eine Leitung 38 verbindet den Zwischenraum 22 zwischen Abgasrohr 18 und Mantel 20 mit dem Innenraum 24 des Warmwasserspeichers. Die Strömungsrichtungen des Wassers sind durch Pfeile angedeutet. Im unteren Bereich stellt eine Leitung 40 eine Verbindung zwischen dem Zwischenraum 22 und dem Innenraum 24 her. In der oberen Leitung 38 ist ein Regler 42 und/oder eine Pumpe 44 angeordnet.

Tritt bei geschlossenem Regler 42 bzw. nicht arbeitender Pumpe Wasser über den Eintritt 26 in den Zwischenraum 22, so wird es über im Innenraum 18' des Abgasrohres 18 aufsteigende Heißgase erhitzt und tritt durch die Leitung 40 in den Innenraum 24 des Warmwasserspeichers. Erfolgt keine Kaltwasserzufuhr, so öffnet der Regler 42 nur und/oder die Pumpe 44 arbeitet nur dann, wenn das Wasser im Zwischenraum 22 eine vorgegebene Temperatur übersteigt, z. B. 50°C.

Die Fig. 5 und 6 zeigen besondere Ausgestaltungen von Wärmeleitblechen 48, welche den Innenraum 18' des Abgasrohres 18 sowie den Zwischenraum 22 zwischen dem Abgasrohr 18 und dem äußeren Mantel 20 durchsetzen. Die Wärmeleitbleche 48 erfüllen eine Doppelfunktion: Zum einen erzeugen sie im Innenraum 18' des Abgasrohres 18 eine z.B. wendelförmige Strömung, wodurch der Wärmeübergang von den Heißgasen in das im Zwischenraum 22 befindliche Kaltwasser gefördert wird und zum anderen stabilisieren sie die gesamte Anordung aus Abgasrohr 18 und Mantel 20, so daß insbesondere für das Abgasrohr 18 ein relativ dünnes und entsprechend gut leitendes Metallblech ausreicht.

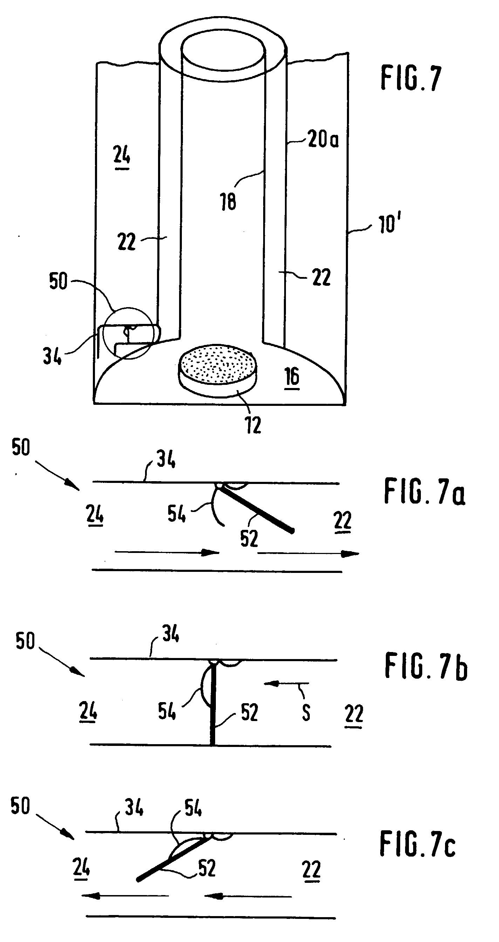

Fig. 7 zeigt eine dem Ausführungsbeispiel gemäß Fiq. 1 entsprechende Anordung mit einer besonderen Ventilanordnung im unteren Wasseraustritt aus dem Zwischenraum 22 in den Innenraum 24 des Warmwasserspeichers. Der das Ventil enthaltende Ausschnitt 50 der Fig. 7 ist in den Fiq. 7a, 7b und 7c vergrößert dargestellt. Die Verbindungsleitung 34 weist eine Ventilklappe 52 auf, die von einer Feder 54 beaufschlagt wird. Die Ventilanordnung 52, 54 wirkt wie ein sogenanntes 3-fach-Rückschlagventil. Dies bedeutet für die einzelnen Betriebszustände des Gas-Warmwasserspeichers folgendes:
a) Erwärmt sich während eines Aufheizvorganges das Wassser im Zwischenraum 22 über die Temperaturen des Wasser im Innenraum 24 des Warmwasserspeichers, so strömt das expandierende Wasser aufgrund der Schwerkraft im Innenraum 22 nach oben und verläßt dort über den Austritt 30 (Fig. 1) den Zwischenraum 22 und strömt in den Innenraum 24. In gleichem Maße muß kälteres Wasser aus dem unteren Bereich des Innenraumes 24 des Warmwasserspeichers in die Leitung 34 nachfließen. Gemäß Fig. 7a öffnet sich hierfür die Klappe 52 ungehindert und das Kaltwasser strömt in Pfeil-Richtung in den Zwischenraum 22 ein.
b) Ist ein Heiz-Vorgang mittels des Gasbrenners 12 beendet und wird warmes Wasser gezapft (siehe Warmwasseraustritt 28 gemäß Fig. 1), so fließt gleichzeitig kaltes Wasser über den Eintritt 26 in den Zwischenraum 22 ein. Da das in den Zwischenraum einströmende Wasser kälter ist als das Wasser im Innenraum 24 des Warmwasserspeichers, würde es aufgrund der Schwerkraft im Zwischenraum nach unten abfließen und von dort über den Austritt 34 in den Innenraum 24 eintreten, so daß warmes Wasser oben bei 30 in den Zwischenraum 22 eintreten würde. Um dieses zu verhindern, ist gemäß Fig. 7b eine Feder 54 vorgesehen, welche die Klappe 52 im Gegen-Uhrzeigersinn so stark vorspannt, daß die Schwerkraft-Strömung des Wassers (siehe Pfeil S in Fig. 7b) die Klappe 52 nicht gegen die Kraft der Feder 54 öffnen kann.
c) Wird jedoch warmes Wasser gezapft (siehe Austritt 28 in Fig. 1), so entsteht an der Klappe 52 eine Druckdifferenz, welche die Kraft der Feder 54 überwindet, so daß gemäß Fig. 7c Wasser in Pfeilrichtung aus dem Zwischenraum 22 in den Innenraum 24 des Warmwasserspeichers nachfließen kann.

Die Fig. 8 bis 15 zeigen besondere Ausgestaltungen des Abgasrohres 18 und der Wärmeleitbleche 48'. Gemäß Fig. 8 kann das Abgasrohr 18 zur Förderung des Wärmeüberganges zwischen den Heißgasen und dem Wasser im Zwischenraum 22 halbmondförmig gestaltet sein. Die Ausführungsbeispiele gemäß den Fig. 9, 10 und 11 verstehen sich von selbst.

Beim Ausführungsbeispiel gemäß Fig. 12 durchsetzen Wärmeleitbleche 48 radial die Wandung des Abgasrohres 18 und überführen somit die Wärme der Heißgase aus dem Innenraum 18' sehr wirksam in den Zwischenraum 22.

Das Ausführungsbeispiel gemäß Fig. 13 unterscheidet sich vom Ausführungsbeispiel gemäß Fig. 8 dadurch, daß zusätzlich noch Wärmeleitbleche 48' im Abgasrohr 18 angeordnet sind.

Fig. 14 zeigt einen Schnitt durch das Ausführungsbeispiel gemäß Fig. 8.

Fig. 15 zeigt ein sternförmiges Abgasrohr 18 mit ebenfalls guten Wärmeübergangseigenschaften.

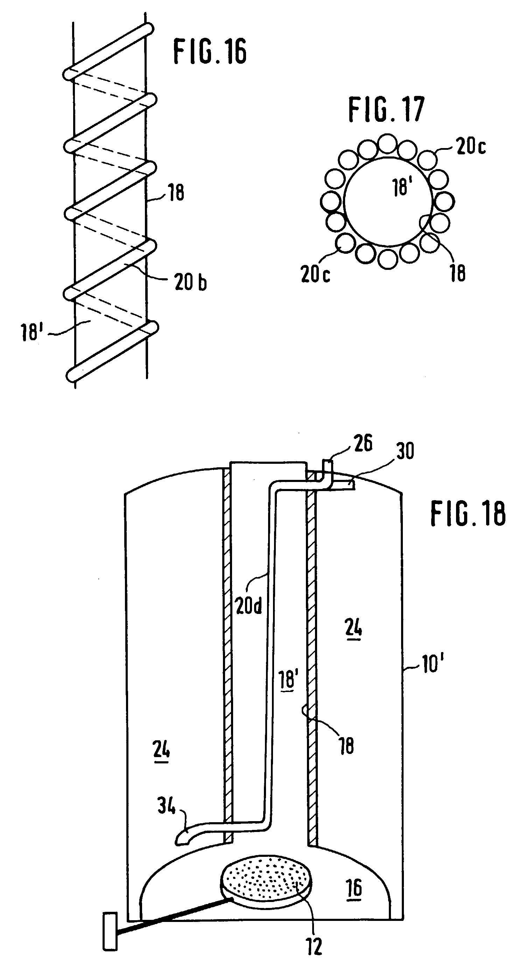

Fig. 16 zeigt eine Abwandlung des Ausführungsbeispiels gemäß Fig. 1, wobei, ebenso wie bei allen anderen Figuren, einander entsprechende Bauteile mit entsprechenden Bezugszeichen versehen sind. Statt eines das Abgasrohr 18 umgebenden Mantels ist beim Ausführungsbeispiel gemäß Fig. 16 eine wendelförmige Rohrschlange 20b um das Abgasrohr 18 gewickelt. In der Rohrschlange 20b wird das Wasser analog wie im anhand der Fig. 1 erläuterten Zwischenraum 22 geführt.

Beim in Fig. 17 im Horizontalschnitt gezeigten Ausführungsbeispiel sind als Führung eine Vielzahl von vertikal aufstrebenden Rohren 20c um das Abgasrohr 18 gelegt. Ansonsten entspricht auch dieses Ausführungsbeispiel dem anhand von Fig. 1 beschriebenen.

Beim Ausführungsbeispiel gemäß Fig. 18 ist die als Rohr 20d ausgebildete Führung direkt durch den Innenraum 18' des Abgasrohres 18 geführt. Auf diese Weise entsteht ein guter Wärmeübergang von den im Abgasrohr 18 geführten Heißgasen in das im Rohr 20d geführte Wasser, wobei das Abgasrohr 18 gut wärmeisolierend ausgebildet sein kann. Das durch den Innenraum 18' geführte Rohr 20d kann in Abwandlung von Fig. 18 gewendelt oder anders gebogen sein, um einen möglichst hohen Wirkungsgrad bezüglich des Wärmeüberganges in das Wasser im Rohr zu erzielen. Ansonsten versteht sich dieses Ausführungsbeispiel anhand der obigen Beschreibung.

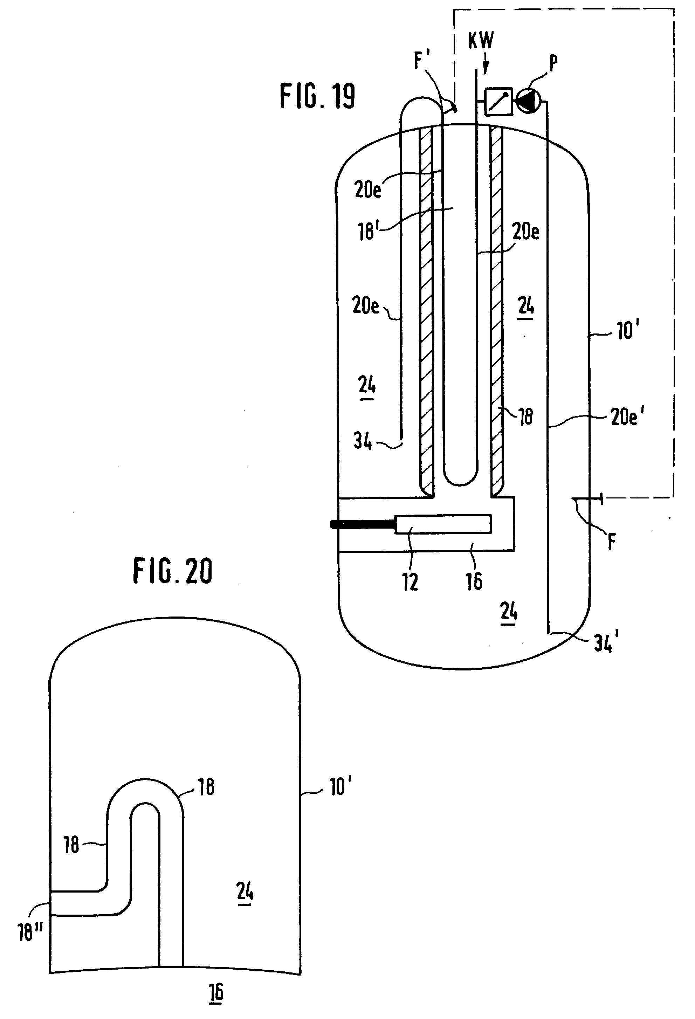

Beim Ausführungsbeispiel gemäß Fig. 19 wird das Kaltwasser an der Stelle KW in ein Rohr 20e eingeführt, welches im Innenraum 18' des Abgasrohres 18 verläuft. Das Abgasrohr 18 ist, wie dargestellt, gut gegen den Innenraum 24 des Warmwasserspeichers wärmeisoliert. In Abwandlung der bisherigen Ausführungsbeispiele wird aber das im Innenraum 18' des Abgasrohrs 18 verlaufende Rohr 20d wieder nach oben aus dem Innenraum 18' des Abgasrohrs 18 heraus und dann in den Innenraum 24 des Warmwasserspeichers 10 geführt. Zusätzlich kann bei dieser Ausführungsform ein weiteres Rohr 20e' vorgesehen sein, welches bis in den unteren Bereich des Innenraumes 24 des Warmwasserspeichers 10 führt (siehe Fig. 19). Eine Umwälzpumpe P fördert Wasser aus den Rohrabschnitt 20e' in das Rohr 20e. Der Rohrabschnitt 20e' reicht bis tief in die unteren Bereiche des Innenraumes 24 des Warmwasserspeichers 10 und ist dort zum Ansaugen von Wasser mit einer Öffnung 34' versehen. Etwa auf mittlerer Höhe des Warmwasserspeichers wird mittels eines Temperaturfühlers F die Wassertemperatur gemessen. Ebenso wird mittels eines weiteren Temperaturfühlers F' die Temperatur des Wassers im durch den Innenraum 18' des Abgasrohres 18 geführten Rohrabschnitt gemessen. Erreicht nun das Wasser im durch den Innenraum 18' des Abgasrohres 18 geführten Rohrabschnitt 20e Temperaturen, die höher sind als die Wassertemperaturen im Innenraum 24 des Warmwasserspeichers (Fühler F), so wird die Umwälzpumpe P in Betrieb gesetzt und pumpt kälteres Wasser aus dem unteren Abschnitten des Warmwasserspeichers in das Rohr 20e durch den heißen Innenraum 18' des Abgasrohres. Fig. 19 zeigt auch, daß der Brennraum 16 für den Gasbrenner 12 nicht notwendig so gestaltet sein muß wie beim Ausführungsbeispiel gemäß Fig. 1.

Fig. 20 zeigt, daß das Abgasrohr 18 nicht notwendig vertikal von unten nach oben durch den Warmwasserspeicher verlaufen muß. Wie in Fig. 20 schematisch dargestellt, kann das Abgasrohr 18 zwecks eines intensiveren Wärmeübergangs gekrümmt durch den Wärmespeicher geführt ist. Beim in Fig. 20 gezeigten Ausführunqsbeispiel verläuft das Abqasrohr 18 überwiegend im kalten Bereich des Warmwasserspeichers 10. Auch wird durch die gezeigte Krümmung der thermische Auftrieb der Luft im Abgasrohr reduziert, so daß die Luft länger im Abgasrohr verbleibt und ihr Wärmeinhalt besser ausgenutzt werden kann. Ansonsten kann das in Fig. 20 gezeigte Abgasrohr, wie sich für den Fachmann unmittelbar ergibt, in Verbindung mit den Merkmalen der anderen Ausführungsbeispiele realisiert werden.

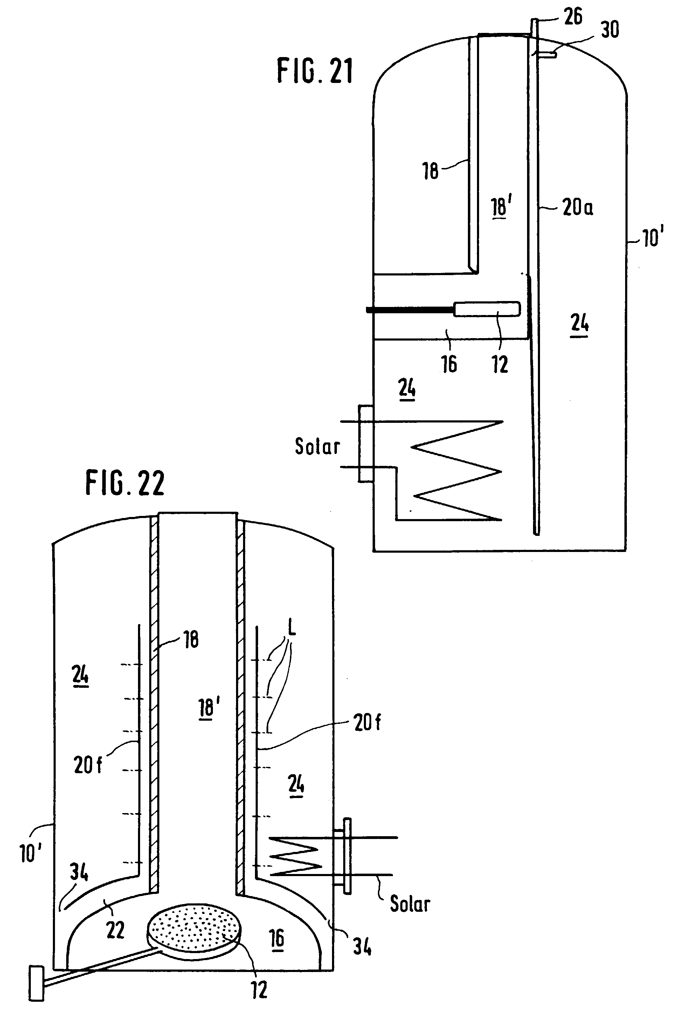

Fig. 21 zeigt ein Ausführungsbeispiel, bei dem der Brennraum 16 nicht im unteren Abschnitt des Warmwasserspeichers, sondern etwas höher angeordnet ist. Dies ist insbesondere dann sinnvoll, wenn der Warmwasserspeicher auch mit einer Solaranlage, wie in Fig. 21 gezeigt, im unteren Bereich betrieben werden kann. Das Wasser im Innenraum 24 des Warmwasserspeichers wird also aus unterschiedlichen Quellen erhitzt.

Das Ausführungsbeispiel gemäß Fig. 22 sieht vor, daß als Führung ein Wärmeleitblech 20f vorgesehen ist, welches den Brennraum 16 sowie einen Großteil des Abgasrohres 18 umschließt. Möglichst tief unten sind Öffnungen 34 zwischen dem Innenraum 24 des Warmwasserspeichers und dem Innenraum 22 zwischen dem Leitblech 20f und dem Abgasrohr 18 bzw. dem Brennraum 16 vorgesehen. Die im Brennraum 16 erzeugten Heißgase erhitzen das Wasser im Zwischenraum 22, welches dort nach oben gedrückt wird, so daß durch die Öffnungen 34 Kaltwasser in die unteren Bereiche des Zwischenraumes 22 eintritt. Es entsteht eine Wasserzirkulation von unten nach oben durch den Zwischenraum 22. Durch das Bezugszeichen L sind Löcher im Leitblech 20f angedeutet, durch die Wasser von innen nach außen austritt. Es entsteht eine Wärmeschichtung im Warmwasserspeicher, wobei das kältere Wasser in den unteren Abschnitten gesammelt wird, für die gegebenenfalls gemäß Fig. 22 eine gesonderte Solar-Wärmequelle oder eine andere Wärmequelle vorgesehen sein kann.

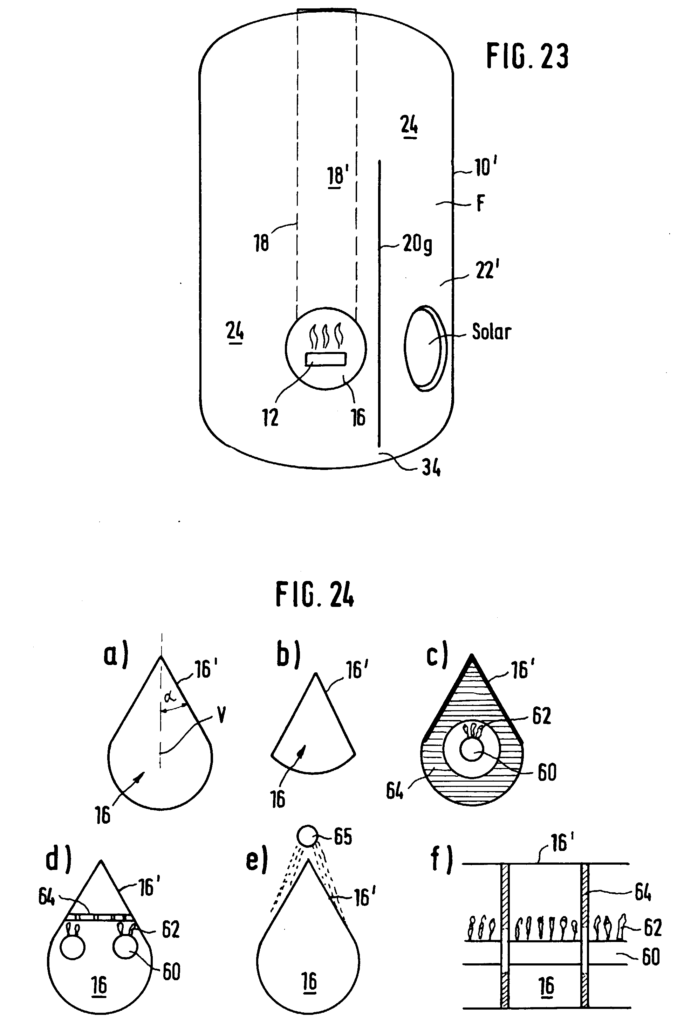

Fig. 23 zeigt ein weiteres Ausführungsbeispiel eines Warmwasserspeichers, bei dem als Führung ein Trennblech 20g vorgesehen ist, welches zwischen dem Brennraum 16 eines Gasbrenners 12 und einem Wärmeaustauscher, wie einen Solar-Wärmeaustauscher oder einen anders gespeisten, angeordnet ist. Bei 34 ist im unteren Abschnitt des Trennbleches 20g eine Öffnung vorgesehen, die den Innenraum 24 des Warmwasserspeichers 10 mit dem Innenraum 22' verbindet, den das Trennblech 20g mit der Wand 10' des Warmwasserspeichers abgrenzt. In diesem Innenraum 22' ist auch der Wärmeaustauscher angeordnet. Mittels eines Temperaturfühlers F wird der Einsatz der beiden Wärmequellen gesteuert.

Bei den vorstehend erläuterten Ausführungsbeispielen dient ein Gasbrenner als Wärmequelle zur Erzeugung der Heißgase, welche ihrerseits das Wasser im Warmwasserspeicher aufheizen. Es versteht sich, daß statt eines Gasbrenners auch andere Wärmequellen, wie Kohle oder fossile Brennstoffe verwendet werden können, mit denen Heißgase erzeugbar sind.

Die Fig. 24 bis 26 zeigen weitere Ausgestaltungen eines Warmwasserspeichers, insbesondere der vorstehend beschriebenen Art. Die in den Fig. 24 bis 26 beschriebenen Ausgestaltungen können jedoch auch für sich eingesetzt werden. Bekannte Gas-Warmwasserspeicher haben den Nachteil, daß sich am Boden des Speichers, unter dem die Gasflamme brennt und der die Wärme an das Wasser im Speicher abgeben soll, im Laufe der Zeit eine sehr dicke Schicht aus Kalk oder dergleichen bildet. Diese Schicht wirkt wärmedämmend und behindert deshalb den Wärmeübergang von der Gasflamme in das Wasser im Speicher. Entsprechendes gilt auch für sogenannte Tauchkammern, bei denen eine Tauch-Brennkammer in das Wasser eingetaucht ist. Auch hier setzen sich Kalk und Schmutz auf dem Oberteil der Tauch-Brennkammer ab. Ist die obere Wand der Brennkammer nur leicht gerundet, so fallen Kalk und Schmutz nicht ab und verbacken sich mit der Zeit immer fester und immer dicker werdend mit der Wand.

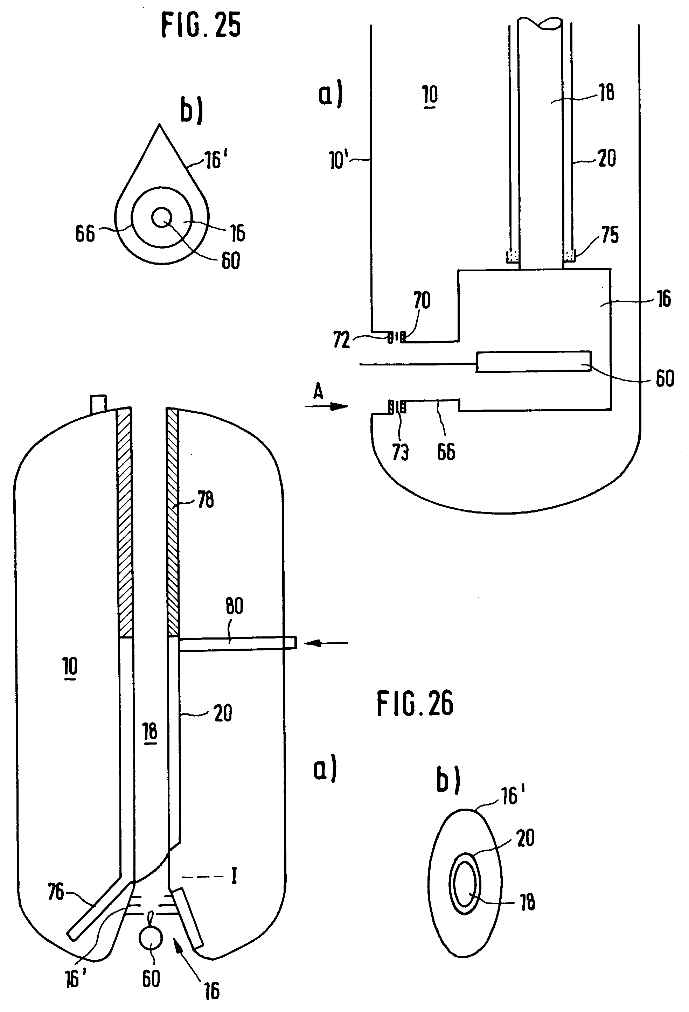

Zur Vermeidung des Absetzens von Kalkschichten auf der Wand der Brennkammer ist gemäß den Fig. 24a bis f vorgesehen, daß die Wand 16' des Brennraumes 16 nach oben schräg zuläuft, d.h. mit der Vertikalen V einen spitzen Winkel α bildet. Die Tauch-Brennkammer ist insgesamt etwa tropfenförmig ausgebildet. Der Einbau der Tauch-Brennkammer in den Warmwasserspeicher ist in Fig. 25a dargestellt.

Aufgrund der schrägen Ausgestaltung der Wand 16' des Brennraumes 16 können sich Kalk und Schmutz nicht mehr absetzen, sondern rutschen nach unten ab.

In den Fig. 24c und d sind die Gasleitung 60 des Brenners und die Gasflamme 62 dargestellt (siehe auch Fig. 24 f).

Damit der Druck des Wassers im Speicher die ebenen Wände 16' des Brennraumes 16 nicht eindrückt, sind Stabilisatoren 64 vorgesehen, deren Anordnung in Fig. 24 f dargestellt ist. Fig. 24 f ist ein Schnitt durch einen Brennraum gemäß Fig. 24a senkrecht zur Zeichnungsebene entlang der Vertikalen V. Wie in Fig. 24f zu erkennen ist, sind bei diesem Ausführungsbeispiel Stabilisatoren 24 in regelmäßigen Abständen angeordnet, um die Wände 16' zu stützen. Beim Ausführungsbeispiel gemäß Fig. 24c ist ein stabilisierender Einsatz 64 vorgesehen, der scheibenförmig ausgestaltet ist und dessen äußere Form der Innenkontur der Brennkammer angepaßt ist.

Der Stabilisator 64 gemäß Fig. 24d ist besonders geeignet, Kalkablagerungen auf der Wand 16' zu verhindern. Der Stabilisator 64 ist nämlich direkt über der Gasflamme 62 angeordnet und unterliegt somit starken Hitzedehnungen bzw. Kontraktionen. Er wird deshalb je nach dem Betriebszustand des Brenners die Wand 16' verkrümmen, so daß Kalkablagerungen und dergleichen abplatzen.

Beim Ausführungsbeispiel gemäß Fig. 24e ist eine Kaltwasserleitung 65 direkt über der Wand 16' der Brennkammer 16 angeordnet, so daß unerwünschte Ablagerungen auf der Wand abgespült werden können.

Fig. 25 zeigt eine besondere Ausgestaltung der Tauch-Brennkammer, die ansonsten den Ausführungbeispielen gemäß den Fig. 24a bis f wahlweise entsprechen kann. Gemäß Fig. 25a ist der vordere Teil der Tauch-Brennkammer 16, d.h. der zur Wand 10' des Speichers 10 gerichtete Abschnitt 66 in bezug auf den eigentlichen Brennraum 16 verjüngt. Hierdurch wird zum einen der Wärmeverlust vom Brennraum zur Wand 10' des Speichers vermindert und zum anderen werden auch die Kosten für die Flanschöffnung reduziert, da kleinere Flansche verwendet werden können. Gemäß Fig. 25a ist der Tauchbrenner mit einem Flansch 70 versehen, der mit einem Flansch 72 zusammenwirkt, der zur Speicherwand 10' gehört. Die Flanschöffnung des Speichers ist gemäß Fig. 25a mit einem Flansch 72 versehen, der einen kleineren Durchmesser hat als der Flansch-Hals, wodurch die Tauch-Brennkammer nicht angeschweißt zu werden braucht, sondern von innen lösbar angeflanscht werden kann. Zwischen den Flanschen 70, 72 kann eine Dichtung 73 zur Wärmedämmung angeordnet werden.

Fig. 25a zeigt am unteren Austritt des vom Mantel 20 gebildeten Zwischenraumes einen ringförmig umlaufenden Fänger 75, in dem vom Abgasrohr 18 abfallender Kalk oder dergleichen gesammelt werden kann. Gesammelter Kalk kann durch ein gesondertes Kaltwasser-Zuflußrohr weggespült werden.

Fig. 26 zeigt ein weiteres Ausführungsbeispiel eines Warmwasserspeichers, bei dem das Abgasrohr 18 nur etwa in der unteren Hälfte von einem Mantel 20 umgeben ist, so daß nur im unteren Bereich das Kaltwasser im Gegenstrom die heißen Abgase im Abgasrohr 18 passiert. Der Zufluß des Kaltwassers erfolgt in Richtung des Pfeiles durch das Rohr 80. Im oberen Bereich ist das Abgasrohr 18 von einem wärmeisolierenden Mantel 78 umgeben. Der Vorteil dieser Ausgestaltung liegt darin, daß Speicher, in denen das Wasser auf sehr hohe Temperaturen aufgeheizt wird, z.B. 90°C, besonders in ihrem oberen Bereich die Abgastemperatur nicht mehr abkühlen können, da sich besonders im oberen Bereich des Speichers das heiße Wasser sammelt. Die Ausgestaltung gemäß Fig. 26a mit der isolierenden Wandung 78' verhindert also, daß die heißen Wasserschichten im oberen Bereich des Speichers ihre Hitze an die durch das Abqasrohr 18 strömenden Gase abgeben.

Fig. 26b zeigt einen Horizontalschnitt durch den Brennraum etwa in Höhe der Linie I. Wie in Fig. 26a dargestellt ist, kann die Brennkammer 16 in einfacher Weise so gestaltet sein, daß sie vom Speicherboden tiefgezogen wird. Es ist auch möglich, das Abgasrohr 18 am unteren Ende auf Brennkammerweite auszuweiten. Das Abgasrohr 18 und der Boden des Speichers 10 können miteinander verschweißt oder verschraubt werden, z.B. über Flansche.

Gemäß Fig. 26b ist die Wandung der Brennkammer bei diesem Ausführungsbeispiel nicht gleichmäßig rund, sondern im Horizontalschnitt leicht oval, wodurch bei Hitze-Dehnung bzw. Kontraktion ein Abplatzen von Kalk oder dergleichen bewirkt wird.

Entsprechendes gilt auch für das Abgasrohr.

## Patentansprüche

1. Warmwasserspeicher mit einem Abgasrohr (18), durch welches Heißgas geführt wird, das Wärme in das Wasser des Warmwasserspeichers abführt, einem Austritt (28) für Warmwasser und mit einem Eintritt (26) für Kaltwasser, wobei am aus gut wärmeleitendem Material bestehenden Abgasrohr (18) zumindest über einen Teil seiner Längserstreckung ein Mantel (20a, 20b, 20c, 20d, 20e, 20f, 20g) vorgesehen ist, der mit dem Abgasrohr (18) einen Zwischenraum (22) bildet, in dem Wasser in gutem Wärmekontakt mit dem Abgasrohr (18) geführt ist und der mit dem Innenraum (24) des Warmwasserspeichers (10) kommuniziert, und wobei der Eintritt (26) für Kaltwasser am vertikal oberen Ende des Zwischenraums (22) angeordnet ist,
dadurch **gekennzeichnet**, daß der Mantel (20) aus einem schlecht wärmeleitenden Material besteht, und daß Mittel (52, 54; 42, 44) vorgesehen sind, um eine unerwünschte Schwerkraftströmung von Wasser aus dem Zwischenraum (22) in den Innenraum (24) zu verhindern.

2. Warmwasserspeicher nach Anspruch 1, mit einem Brennraum (16), der eine Wand (16') aufweist, die mit dem Wasser im Speicher in Kontakt steht,
dadurch **gekennzeichnet,** daß die genannte Wand (16') zumindest teilweise mit der Vertikalen (V) einen spitzen Winkel (α) bildet.

3. Warmwasserspeicher nach Anspruch 2,
dadurch **gekennzeichnet**, daß die Wand (16') des Brennraumes von einem temperaturabhängigen Dehnungskörper (64) beaufschlagt ist.

4. Warmwasserspeicher nach einem der vorhergehenden Ansprüche,
dadurch **gekennzeichnet**, daß in einer leitenden Verbindung (34) zwischen einem von dem Mantel und dem Abgasrohr (18) gebildeten Zwischenraum (22) und dem Inhenraum (24) des Warmwasserspeichers (10) ein Ventil (52) angeordnet ist.

## Claims

1. Boiler, comprising an exhaust gas pipe (18) for conducting hot gas which supplies heat into the water of the boiler, a hot water outlet (28), and a cold water inlet (26), the exhaust gas pipe (18) consisting of a material of good thermal conductivity being provided over at least part of its length with a sleeve (20a, 20b, 20c, 20d, 20e, 20f, 20g), said sleeve and said exhaust gas pipe (18) defining a spacing (22) therebetween for guiding water in good thermal contact with said exhaust gas pipe (18) and for communicating with the inner space (24) of the boiler (10), and said cold water inlet (26) being located at the vertical upper end of said spacing (22),
**characterized in that** said sleeve (20) consists of a material of poor thermal conductivity, and that means (52, 54; 42, 44) are provided for preventing undesired gravitational flow of water from the spacing (22) into said inner space (24).

2. Boiler according to claim 1, comprising a combustion space (16) including a wall (16') which is in contact with the water of said boiler,
**characterized in that** said wall (16') forms at least partially an acute angle (α) with vertical (V).

3. Boiler according to claim 2,
**characterized in that** said wall (16') of the combustion space is supported by a temperature-depending expansion means (64).

4. Boiler according to any of the preceding claims,
**characterized in that** a valve (52) is provided in a connection pipe (34) arranged between a space (22) formed by said sleeve and said exhaust gas pipe (18) and said inner space (24) of said boiler (10).

## Revendications

1. Ballon d'eau chaude comprenant un conduit de gaz de combustion (18) dans lequel circulent des gaz chauds qui cèdent de la chaleur à l'eau du ballon d'eau chaude, une sortie (28) d'eau chaude et une entrée (26) d'eau froide, une enveloppe (20a, 20b, 20c, 20d, 20e, 20f, 20g) formée d'un matériau bon conducteur de la chaleur étant prévue à proximité du conduit de gaz de combustion (18), au moins sur une partie de sa longueur, qui forme avec le conduit de gaz de combustion (18) un espace intermédiaire (22) dans lequel circule de l'eau en bon contact d'échange de chaleur avec le conduit de gaz de combustion (18) et qui communique avec le volume intérieur (24) du ballon d'eau chaude (10) et l'entrée (26) d'eau froide étant disposée à l'extrémité verticalement supérieure de l'espace intermédiaire (22),
caractérisé en ce que l'enveloppe (20) est composée d'un matériau mauvais conducteur de la chaleur et en ce que des moyens (52, 54; 42, 44) sont prévus pour empêcher un écoulement par gravité indésirable d'eau hors de l'espace intermédiaire (22).

2. Ballon d'eau chaude selon la revendication 1 comprenant une chambre de combustion (16) qui présente une paroi (16') qui est en contact avec l'eau qui est dans le ballon,
caractérisé en ce que ladite paroi (16') fait au moins partiellement un angle aigu (α) avec la verticale (V).

3. Ballon d'eau chaude selon la revendication 2,
caractérisé en ce que la paroi (16') de la chambre de combustion est déformée par un organe de dilatation (64) dépendant de la température.

4. Ballon d'eau chaude selon l'une quelconque des revendications précédentes,
caractérisé en ce qu'une soupape (52) est disposée dans un raccordement de communication (34) entre un espace intermédiaire (22) formé par l'enveloppe et le conduit de gaz de combustion (18) et le volume intérieur (24) du ballon d'eau chaude (10).
